(19) Europäisches Patentamt / European Patent Office / Office européen des brevets

(11) **EP 3 904 308 B1**

(12) **EUROPEAN PATENT SPECIFICATION**

(45) Date of publication and mention
of the grant of the patent:
**05.07.2023 Bulletin 2023/27**

(21) Application number: **19905785.2**

(22) Date of filing: **23.12.2019**

(51) International Patent Classification (IPC):
**C04B 14/10** (2006.01)   **C04B 28/14** (2006.01)
**C04B 38/08** (2006.01)   **E04B 1/76** (2006.01)
**E04B 1/80** (2006.01)   **E04B 1/94** (2006.01)
**C04B 28/06** (2006.01)   **C08J 9/40** (2006.01)
**C04B 111/28** (2006.01)

(52) Cooperative Patent Classification (CPC):
(C-Sets available)
**C04B 14/10; C04B 28/065; C04B 28/14;
C04B 38/08; C08J 9/40; E04B 1/942;**
C04B 2111/00534; C04B 2111/28; C08J 2201/038;
C08J 2325/06; Y02W 30/91         (Cont.)

(86) International application number:
**PCT/JP2019/050394**

(87) International publication number:
**WO 2020/137987 (02.07.2020 Gazette 2020/27)**

(54) **FIRE-RESISTANT HEAT-INSULATION COMPOSITION, FIRE-RESISTANT HEAT-INSULATION COMPOSITION SLURRY, FIRE-RESISTANT HEAT-INSULATION BOARD, AND FIRE-RESISTANT HEAT-INSULATION STRUCTURE**

FEUERBESTÄNDIGE WÄRMEDÄMMZUSAMMENSETZUNG, FEUERBESTÄNDIGER WÄRMEDÄMMZUSAMMENSETZUNGSSCHLAMM, FEUERBESTÄNDIGE WÄRMEDÄMMPLATTE UND FEUERBESTÄNDIGE WÄRMEDÄMMSTRUKTUR

COMPOSITION D'ISOLATION THERMIQUE RÉSISTANT AU FEU, SUSPENSION DE COMPOSITION D'ISOLATION THERMIQUE RÉSISTANT AU FEU, PANNEAU D'ISOLATION THERMIQUE RÉSISTANT AU FEU ET STRUCTURE D'ISOLATION THERMIQUE RÉSISTANT AU FEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2018  JP 2018248463**

(43) Date of publication of application:
**03.11.2021  Bulletin 2021/44**

(73) Proprietor: **JSP Corporation
Tokyo 100-0005 (JP)**

(72) Inventors:
• **TABARA, Kazuto
Machida-city, Tokyo  194-8560 (JP)**
• **NAGASAKI, Hironori
Machida-city, Tokyo 194-8560 (JP)**
• **MIZUTA, Kohei
Machida-city, Tokyo 194-8560 (JP)**
• **MITSUMOTO, Masanori
Tokyo 100-0005 (JP)**
• **SHIMOJO, Yoshinori
Tokyo 100-0005 (JP)**

(74) Representative: **Gulde & Partner
Patent- und Rechtsanwaltskanzlei mbB
Wallstraße 58/59
10179 Berlin (DE)**

(56) References cited:
FR-A1- 2 900 653    JP-A- H0 761 841
JP-A- S63 297 256    JP-A- 2017 077 994

- **Anonymous: "An industrial inorganic raw material specially processed from the natural fibrous clay mineral", Milcon , 1 January 2007 (2007-01-01), pages 1-1, XP055825765, Retrieved from the Internet: URL:http://www.showa-hp.co.jp/pdf/milcon.p df**

(52) Cooperative Patent Classification (CPC): (Cont.)

C-Sets
**C04B 14/10, C04B 20/0048;
C04B 28/065, C04B 14/043, C04B 14/043,
C04B 18/082, C04B 2103/14, C04B 2103/22;
C04B 28/065, C04B 14/465, C04B 14/4656,
C04B 18/082, C04B 2103/14, C04B 2103/22;
C04B 28/14, C04B 7/32, C04B 14/10,
C04B 38/0074, C04B 38/08, C04B 2103/14,
C04B 2103/22**

**Description**

Technical Field

The present invention relates to a fire-resistant heat-insulation composition to construct a fire-resistant heat-insulation structure of a building, a fire-resistant heat-insulation composition slurry, a fire-resistant heat-insulation board and a fire-resistant heat-insulation structure.

Background Art

For buildings, various heat-insulation materials and fire-resistant materials are used, and as heat-insulation materials, polyurethane foam, polystyrene foam, phenol foam, etc., which are each a resin foam having a high heat-insulation effect, light weight and good workability, are used, and further, low-cost inorganic fiber assemblies such as glass wool and rock wool are also used.

Since the resin foams are organic substances, they burn when a fire occurs, and often cause the extent of damage, so that measures for that have been desired.

By contrast, the inorganic fiber assemblies such as glass wool and rock wool are mainly constituted of unburnable materials, but they tend to have high thermal conductivity as compared with the resin foams and are inferior in heat insulation properties, and moreover, there is prickle feeling because they are fibrous, so that they have a problem of inferior workability. Furthermore, conventionally, the fiber assembly takes a packing style in which it is placed in a plastic bag, in the construction, and a method of fitting this between a pillar and an exterior wall of a house has been adopted, but there are problems of occurrence of a gap and falling off over time.

Meanwhile, heat-insulation materials obtained by imparting incombustibility to resin foams are already on the market. Such a heat-insulation material is, for example, an incombustible heat-insulation board having a structure in which an incombustible material, such as aluminum foil, aluminum hydroxide paper or gypsum-based plate material, is laminated on one or both surfaces of a phenol foam board. However, in such a conventional incombustible heat-insulation board, the surface exposed to a flame does not burn in case of fire, but there still remain a problem in that because of its heat, the phenol foam inside melts to form a cavity, and the board itself falls off and causes spread of fire, so that the board does not become a material satisfying the fireproof construction specifications defined by the Building Standard Law.

Regarding the past techniques to improve combustion resistance of resin foams, for example, as techniques to improve combustion resistance of polyurethane foam, there are known a technique relating to a heat-insulation material that forms a foam using an alkali metal carbonate, isocyanates, water and a reaction catalyst (Patent Literature 1), and a technique relating to a grouting agent mainly for ground improvement for a tunnel, which is a hardenable composition composed of one or two or more of inorganic compounds selected from the group consisting of hydroxides, oxides, carbonates, sulfates, nitrates, aluminates, borates and phosphates of metals selected from the group consisting of lithium, sodium, potassium, boron and aluminum, water and isocyanates (Patent Literature 2). However, the conventional technique of Patent Literature 2 is one having been developed for ground improvement and does not aim to obtain heat insulation properties. In the conventional technique to cause an aqueous solution of an alkali metal carbonate of 30% or more to react with isocyanates, as particularly in Patent Literature 1, a large amount of unreacted water remains because a large amount of water is used, and therefore, in order to use it as a heat-insulation material, drying is necessary, and moreover, a cell size of the resulting foam is large, so that it is thought that the heat insulation properties are not high.

As techniques to improve combustion resistance by coating a synthetic resin foam, there are disclosed a technique relating to a heat-insulation coated particle obtained by further coating a foam particle of a synthetic resin, which has been subjected to surface treatment by forming a coating composed of sepiolite and an aqueous organic binder containing a water-soluble resin as a main component, with a coating material composed of an inorganic powder and an aqueous inorganic binder containing a water glass that contains an alkali metal silicate as a main component, and then hardening the particle by drying (Patent Literature 3), and a technique relating to an inorganic substance-containing synthetic resin foam wherein at least part of cell structure of a surface of the synthetic resin foam is filled with a silica-based inorganic substance composed of one or a mixture of two or more of calcium silicate, magnesium silicate, aluminum silicate and aluminosilicate (Patent Literature 4). However, in such conventional techniques using silicates, the resin foam melts to lose binding force of the silicate itself filled therein and is powdered, so that it is thought that retaining of a shape of a heat-insulation board is difficult.

There are known a technique relating to a foamed resin composite structure wherein connecting voids formed among expanded beads in a foamed resin formed of a bead method polystyrene foam are filled with a filling material composed of an organic substance having an oxygen index of more than 21 (Patent Literature 5), and a technique relating to a composite molded body wherein voids of a thermoplastic resin foamed particle molded body having connecting voids and having a void ratio of 5 to 60% are filled with a hardened substance of cement containing smectite or gypsum (Patent Literature 6). However, in Patent Literature 5, the connecting voids are filled with a filling material that is an organic substance, and therefore, improvement in combustion resistance to non-combustible level cannot be expected. A target of Patent Literature 5 is an expanded polystyrene foam having a void ratio of about 3% and having extremely solid voids, and it is hard to say that the voids can be effectively utilized. In Patent Literature 6, it is preferable that a hardened substance of cement contain ettringite, and an example of cement containing ettringite is given with a trade name, and it is stated that smectite that is thought to be one of segregation reducing agents is contained. However, smectites are layered clay minerals, and it is thought that marked improvement in fire resistance by the addition of smectite cannot be expected. Patent Literature 7 describes a composition containing calcium aluminate having a CaO content of 40 mass% or more, gypsum, an inorganic powder having hollow structure and having an average particle size of 20 to 60 $\mu$m, and a waste glass foam powder having an average particle size of 20 to 130 $\mu$m, but the object of the literature is neither to achieve segregation reduction nor to improve fire resistance taking into consideration ratios of water of crystallization of talc, sepiolite and zeolite and crystal structure thereof. The materials disclosed in Patent Literatures 7 and 8 are used for the purpose of protecting a steel frame surface from fire by coating it with the materials, and it is thought that they do not have great heat insulation properties.

A composition for fire-resistant coating comprising ettringite as the main component and further comprising an inorganic compound powder or a titanium oxide powder that releases an incombustible gas at 100 to 1000°C is also known (Patent Literature 9).

A technique relating to an unburned fire-resistant heat-insulation material comprising a heat-resistant aggregate, a lightweight aggregate, an alumina-based binder, silicon carbide and a reinforcing fiber is disclosed, and Shirasu balloon as the lightweight aggregate and calcium aluminate as the alumina-based binder are described (Patent Literature 10). Patent Literature 10 discloses further coating compositions.

Citation List

Patent Literature

Patent Literature 1: JP 10-67576 A
Patent Literature 2: JP 8-92555 A
Patent Literature 3: JP 2001-329629 A
Patent Literature 4: JP 2012-102305 A
Patent Literature 5: JP 4983967 B
Patent Literature 6: JP 2015-199945 A
Patent Literature 7: JP 2017-77994 A
Patent Literature 8: JP 7-48153 A
Patent Literature 9: JP 7-61841 A
Patent Literature 10: JP 62-41774 A
Patent Literature 11: JP S63 297256 A

Summary of Invention

Technical Problem

However, even the aforesaid conventional techniques of Patent Literatures 9 and 10 are on the premise that such techniques are used for a fire-resistant heat-insulation material that is used for iron manufacture or steel manufacture and is used in a high-temperature region, so that both the heat insulation properties in normal environment and the fire resistance in case of fire are insufficient. On this account, a technique making heat insulation properties and fire resistance compatible with each other has been desired.

Solution to Problem

The present inventors have made various studies, and as a result, have found that by using specific formulation, a composition that solves such a problem as described above to makes high heat insulation properties and high fire resistance compatible with each other, and have completed the present invention.
The present invention is described in the appended set of claims.

Advantageous Effect of Invention

By using the fire-resistant heat-insulation composition of the present invention and its slurry, a fire-resistant heat-insulation board having both fire resistance and heat insulation properties can be obtained.

Brief Description of Drawings

[Figure 1] Figure 1 is a schematic diagram of crystal structure of a fibrous inorganic clay mineral (sepiolite).
[Figure 2] Figure 2 is a side view showing construction of a fire-resistant structure.
[Figure 3] Figure 3 is a top view showing construction of a fire-resistant structure.

Description of Embodiments

The present invention will be described in detail hereinafter. In the present specification, part and % are shown on the basis of mass unless otherwise specified. In the present specification, the numerical value range includes its upper limit and lower limit unless otherwise specified.

The fire-resistant heat-insulation composition according to the embodiment of the present invention (also referred to as "composition" simply hereinafter) is characterized by comprising predetermined calcium aluminate, gypsum and a fibrous inorganic clay mineral in predetermined ratios.

The calcium aluminate is a generic term for substances having hydration activity and containing, as main components, CaO and $Al_2O_3$, which can be obtained by mixing a calcia raw material, an alumina raw material, etc., then calcining the mixture in a kiln or melting the mixture by an electric furnace, and cooling it. The calcium aluminate is not particularly limited, but from the viewpoint of initial strength development after hardening, it is preferably amorphous calcium aluminate having been quenched after melting. The CaO content of the calcium aluminate is preferably 34% or more, and more preferably 40% or more, from the viewpoint of reaction activity. If the CaO content is less than 34%, sufficient fire resistance is not exhibited.

As the calcium aluminate, a compound wherein part of Cao or $Al_2O_3$ of calcium aluminate is substituted by an alkali metal oxide, an alkaline earth metal oxide, silicon oxide, titanium oxide, iron oxide, an alkali metal halide, an alkaline earth metal halide, an alkali metal sulfate, an alkaline earth metal sulfate, or the like may be used, or a compound containing CaO and $Al_2O_3$ as main components and containing any of the above substances in a small amount as a solid solution may be used.

The vitrification ratio of the calcium aluminate may preferably be 8% or more, more preferably 50% or more, and most preferably 90% or more. The vitrification ratio of the calcium aluminate can be calculated by the following method. Regarding a sample before heating, a main peak area S of the crystalline mineral is measured by powder X-ray diffractometry in advance, thereafter, the sample is heated at 1000°C for 2 hours and then slowly cooled at a cooling rate of 1 to 10°C/min, then the main peak area $S_0$ of the crystalline mineral after heating is measured by powder X-ray diffractometry, and further, using these $S_0$ and S values, the vitrification ratio $\chi$ is calculated from the following formula. Vitrification ratio $\chi$ (%) = $100\times(1-S/S_0)$

Regarding the particle size of the calcium aluminate, a Blaine specific surface area thereof is preferably 3,000 $cm^2/g$ or more, and more preferably 5,000 $cm^2/g$ or more, from the viewpoint of initial strength development. When the Blaine specific surface area is 3,000 $cm^2/g$ or more, initial strength development is enhanced. Here, the Blaine specific surface area is a value measured in accordance with JIS R5201:2015, "Physical Testing Methods for Cement".

As the gypsum contained in the composition, any of anhydrous gypsum, hemihydrate gypsum and dihydrate gypsum can be used without any restriction. Anhydrous gypsum is a generic term for a compound that is anhydrous calcium sulfate and is represented by a molecular formula of $CaSO_4$, hemihydrate gypsum is a generic term for a compound represented by a molecular formula of $CaSO_4 \cdot 1/2H_2O$, and dihydrate gypsum is a generic term for a compound represented by a molecular formula of $CaSO_4 \cdot 2H_2O$.

Regarding the particle size of gypsum, an average particle size thereof may preferably be 1 to 30 $\mu$m, and more preferably 5 to 25 $\mu$m, from the viewpoint of obtaining incombustibility, initial strength development and appropriate working time. Here, the average particle size is a value measured using a measuring laser diffraction type particle size distribution meter in a state where gypsum has been dispersed using an ultrasonic device.

The amount of gypsum used in the composition may preferably be 70 to 250 parts by mass, and more preferably 100 to 200 parts by mass, based on 100 parts by mass of the calcium aluminate. If the amount of gypsum is less than 70 parts by mass or exceeds 300 parts by mass, sufficient fire resistance may not be imparted.

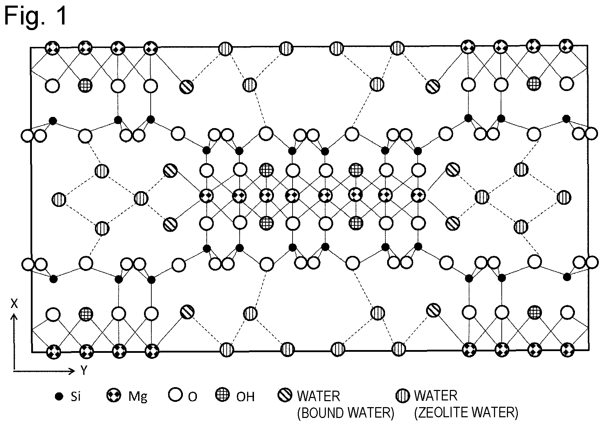

The fibrous inorganic clay mineral (also referred to as "fibrous mineral" simply hereinafter) contained in the composition needs to have a water content of at least 5% or more, from the viewpoint of obtaining heat insulation properties and fire resistance. The fibrous inorganic clay mineral not only imparts segregation reducing effect to the composition but also enhances fire resistance. Figure 1 is a schematic diagram of the crystal structure of the fibrous inorganic clay mineral which is sepiolite in Figure 1. The diagram relies on to the structural model of Brauner and Preisinger; see also Japanese Patent Laid-Open No. 2004-59347, Japanese Patent Laid-Open No. 2002-338236. The fibrous mineral is a kind of a hydrous magnesium silicate mineral and is a fibrous clay mineral having such crystal structure as shown in Figure 1 and being characterized in that pores are present inside the crystal, and in the pores, water of crystallization is present in the form of bound water or zeolite water.

According to Figure 1, the two-dimensional crystal structure forms fibrous crystal structure wherein bricks are alternately stacked. In this unit crystal structure, four hydroxyl groups bonded to Mg atoms, four bound water bonded to Mg atoms, and eight zeolite water are present, as shown in Figure 1. Figure 1 indicates that the number of zeolite water in the unit structure is considered to be 8.

The fibrous mineral preferably has a specific surface area of 50 to 500 $m^2/g$, a fiber length of 0.1 to 50 $\mu m$, and an aspect ratio, as represented by fiber length/fiber diameter, of 0.1 to 5000, though they vary depending upon the type of the fibrous mineral. Here, the specific surface area is a value measured in accordance with BET method and JIS Z8830:2013.

Typical examples of the fibrous minerals include, but are not limited to, sepiolite $((OH_2)_4(OH)_4Mg_8Si_{12}O_{30}\cdot6\text{-}8H_2O)$, palygorskite (attapulgite; $(OH_2)_4(OH)_2Mg_5Si_8O_{20}\cdot4H_2O)$, wollastonite, and loglinite. Among these, one or more selected from sepiolite and palygorskite (or attapulgite) are preferable.

The water content of the fibrous mineral may preferably be 7% or more, and more preferably 9% or more. The upper limit of the water content is not particularly limited, but may preferably be, for example, 30% or less. A fibrous mineral is heated from 30°C up to 200°C by a thermogravimetric analyzer (TGA), and using mass X before heating and decreased mass $X_1$, a water content W can be calculated from the following formula. Measurement was carried out under the conditions of a sample quantity of 10 mg, a temperature increasing rate of 5.0°C/min, and an atmosphere of air.

$$\texttt{Water content W (mass\%) = X_1/X} \times \texttt{100}$$

The amount of the fibrous mineral used in the composition may preferably be 0.1 to 20 parts by mass, and more preferably 3 to 15 parts by mass, based on 100 parts by mass of the total of the calcium aluminate and the gypsum. If the amount of the fibrous mineral is less than 0.1 part by mass, there is a possibility that fire resistance and heat insulation properties may not be enhanced, and if the amount thereof exceeds 20 parts by mass, there is a possibility that fire resistance and heat insulation properties may be lowered. The fibrous mineral may be used by premixing it with calcium aluminate and gypsum, or may be used by dispersing it in water in advance.

In a preferred embodiment, the composition may further contain an inorganic powder having pores (also referred to as "inorganic powder" simply hereinafter). The inorganic powder is not particularly limited as long as it is a powder of an inorganic material having pores, and any of such powders is employable. Typical examples of the inorganic powders may include an inorganic powder obtained from a foam prepared by heating volcanic deposits at a high temperature, which is typified by Shirasu balloon, fly ash balloon generated from a thermal power plant, an inorganic powder obtained by calcining obsidian, perlite or shale, and a waste glass foam powder (recycled glass balloon) obtained by crushing a waste such as a glass bottle, then calcining the crushed waste and subjecting it to particle size adjustment, and one or more of these are employable. When fly ash balloon is used, one having an ignition loss of 5% or less is preferably used from the viewpoint of small amount of unburned carbon. In the present specification, the inorganic powder is an inorganic powder other than the aforesaid calcium aluminate, gypsum and fibrous inorganic clay mineral.

Regarding the particle size of the inorganic powder, an average particle size thereof may preferably be 1 to 150 $\mu m$, and more preferably 15 to 100 $\mu m$. Here, the average particle size is a value measured using a measuring laser diffraction type particle size distribution meter in a state where the powder has been dispersed by an ultrasonic device.

The amount of the inorganic powder used in the composition may preferably be 2 to 100 parts by mass, and more preferably 5 to 80 parts by mass, based on 100 parts by mass of the total of the calcium aluminate and the gypsum. When the amount of the inorganic powder is 2 parts by mass or more, heat insulation properties are enhanced, and when the amount thereof is 100 parts by mass or less, fire resistance is enhanced.

In a preferred embodiment, the composition may further contain a setting retarder. The setting retarder is a substance to adjust a usable time of the fire-resistant heat-insulation composition slurry. Examples of the setting retarders include inorganic setting retarders and organic setting retarders. Examples of the inorganic setting retarders include salts of phosphoric acid, silicofluoride, copper hydroxide, boric acid or its salt, zinc oxide, zinc chloride, and zinc carbonate. Examples of the organic setting retarders include oxycarboxylic acids (citric acid, gluconic acid, malic acid, tartaric acid, glucoheptonic acid, oxymalonic acid, lactic acid, etc.) or salts thereof (sodium salt, potassium salt, etc.), and saccharides typified by sugar. One or more of these are employable. Also, mixtures of combinations of the inorganic setting retarders, such as carbonate, bicarbonate, nitrate, hydroxide and silicate, and the above oxycarboxylic acids or their salts may be used. Among these, an oxycarboxylic acid or a salt thereof alone or a mixture of an inorganic setting retarder and an oxycarboxylic acid or a salt thereof is preferable. In the present specification, the setting retarder is a setting retarder other than the aforesaid calcium aluminate, gypsum, fibrous inorganic clay mineral and inorganic powder having pores.

The amount of the setting retarder used in the composition may preferably be 0.02 to 2.0 parts by mass, and more preferably 0.05 to 1.0 part by mass, based on 100 parts by mass of the total of the calcium aluminate and the gypsum. When the amount of the setting retarder is 0.02 part by mass or more, adjustment to a necessary usable time is facilitated, and when the amount thereof is 2.0 parts by mass or less, the hardening time does not become too long, and poor hardening does not easily occur.

In a preferred embodiment, the composition may further contain a hydration accelerator. The hydration accelerator is a substance that accelerates reaction of calcium aluminate with gypsum to increase the amount of water of crystallization, thereby enhancing fire resistance, and is not particularly limited. Examples of the hydration accelerators include a hydroxide such as calcium hydroxide, an alkali metal silicate, aluminum sulfate such as anhydrous aluminum sulfate, an alkali metal carbonate such as sodium carbonate, a nitrate, a nitrite, various Portland cement such as ordinary Portland cement, and various inorganic filler fine powders, and one or more of these are employable. In the present specification, the hydration accelerator is a hydration accelerator other than the aforesaid calcium aluminate, gypsum, fibrous inorganic clay mineral, inorganic powder having pores and setting retarder.

The amount of the hydration accelerator used in the composition is preferably 0.1 to 15 parts by mass, and more preferably 0.5 to 10 parts by mass, based on 100 parts by mass of the total of the calcium aluminate and the gypsum. When the amount of the hydration accelerator is 0.1 part by mass or more, a sufficient hydration acceleration effect is obtained, and when the amount thereof is 15 parts by mass or less, an effect of securing a sufficient usable time is exerted.

By using water (tap water or the like) together with the fire-resistant heat-insulation composition according to the embodiment of the present invention, a fire-resistant heat-insulation composition slurry may be prepared. The amount of water for preparing the slurry is not particularly limited, but may preferably be 40 to 300 parts by mass, and more preferably 80 to 250 parts by mass, based on 100 parts by mass of the total of the calcium aluminate and the gypsum. When the amount of water is 40 parts by mass or more, the filling of voids becomes homogeneous, and the fire resistance is enhanced, and when the amount thereof is 300 parts by mass or less, the ettringite content in the hardened body in the void increases, and the fire resistance is enhanced.

By filling voids of a resin molded body having a continuous void ratio of 25 to 70 vol% (also referred to as "resin molded body" simply hereinafter) with the fire-resistant heat-insulation composition slurry according to an embodiment of the present invention and solidifying the slurry, a fire-resistant heat-insulation board may be produced. The resin molded body is a resin having continuous voids and refers to one having voids capable of being filled with the slurry. Examples of types of the resins include an expanded polyvinyl alcohol resin, an expanded polyurethane resin, an expanded polystyrene resin, an expanded polyolefin resin, and an expanded phenolic resin. By filling a mold with granular foams, which are formed of any of these resins, have closed cells and have a diameter of several millimeters, and subjecting the granular foams to heat-pressure molding to mold them in such a manner that continuous voids are formed among the granular foams, the resin molded body is obtained. The continuous void ratio of the resin molded body may be adjusted by the degree of pressurization during the production. Regarding the polystyrene resin, the resin molded body having continuous voids may be produced in accordance with a method for producing a bead method polystyrene foam. Among these, an expanded polystyrene resin molded body is preferable from the viewpoint of versatility. When the continuous void ratio is 25 vol% or more, sufficient fire resistance can be imparted to the resulting board, and when it is 70 vol% or less, board density is decreased and thermal conductivity is decreased, so that heat insulation properties are enhanced.

The continuous void ratio of the resin molded body can be determined by, for example, the following method. A rectangular parallelepiped sample is cut out from a thermoplastic resin foamed particle molded body having been allowed to stand for 24 hours or longer in an environment of the temperature of 23°C and the relative humidity of 50%, and an apparent volume $V_a$ [cm$^3$] is determined from external dimensions of the sample. Subsequently, the sample is sunk in a measuring cylinder containing ethanol of 23°C using a tool such as a wire cloth, and slight vibration or the like is applied to the sample to remove air present in the voids of the molded body. Then, a true volume $V_b$ [cm$^3$] of the sample, which is read out from a water level rise taking into consideration a volume of the tool such as a wire cloth, is measured. Using the apparent volume $V_a$ [cm$^3$] and the true volume $V_b$ [cm$^3$], the continuous void ratio V [%] can be determined from the following formula.

$$\texttt{Continuous void ratio V [\%] = [(Va-Vb)/Va]×100}$$

The slurry filled in the continuous voids undergoes hydration reaction to produce a hydration product, and the product is hardened. The continuous voids in the resin molded body are filled with the hydration product. The hydration product is, for example, ettringite formed by the reaction of calcium aluminate with gypsum. Since ettringite has a large amount of water as water of crystallization in molecules, it is dehydrated by heating, exhibits fire extinguishing action, and imparts incombustibility to the resin molded body. In the embodiment of the present invention, ettringite is actively produced by using calcium aluminate having a CaO content of 34% or more, and enhances incombustibility of the resin molded body.

Examples of methods for filling the resin molded body with the fire-resistant heat-insulation composition slurry include, but are not limited to, a method of injecting the slurry with compressed air or sucking the slurry by reducing the pressure with a vacuum pump to perform filling, and a method of filling the voids while applying vibration of 30 to 60 Hz to the resin molded body set on a vibration table. Among these, a method of filling the voids while applying vibration is preferable from the viewpoint of quality stability.

A method for curing the fire-resistant heat-insulation board after filling of voids with the fire-resistant heat-insulation composition slurry is not particularly limited, but is, for example, a method of air-curing the board at ordinary temperature after filling or a method of coating the board surface with a plastic film and air-curing it at ordinary temperature. In order to shorten the curing time, the fire-resistant heat-insulation board may be cured at a temperature of 30 to 50°C.

In certain embodiments, the whole board may be further coated with a non-woven fabric, or a reinforcing material such as a lattice-like fiber sheet may be arranged on one or both surfaces of the board, or a non-woven fabric and a fiber sheet may be used in combination.

The shape of the fire-resistant heat-insulation board of the present invention is not particularly limited, but the board may preferably have a length of 500 to 1000 mm, a width of 1000 to 2000 mm, and a thickness of 10 to 100 mm. The thickness may more preferably be 50 to 100 mm. When the size is small, the fire-resistant heat-insulation board becomes lightweight, and workability during setting is improved.

In certain embodiments, in the preparation of the fire-resistant heat-insulation composition slurry, one or more of various additives may be used as long as they have no influence on performance. Examples of such additives include a surfactant, an air entraining agent, a carbonization accelerator, a flame retardant, a fire spread preventing agent, an inorganic substance, a rust preventive, an antifreezing agent, a shrinkage reducing agent, a clay mineral and an anion exchanger.

The density of the fire-resistant heat-insulation board according to the embodiment of the present invention is preferably 100 to 800 $kg/m^3$, and more preferably 200 to 500 kg/m3, from the viewpoint that the fire resistance and the heat insulation properties are not impaired. When the density is 100 $kg/m^3$ or more, sufficient fire resistance can be secured, and when the density is 800 $kg/m^3$ or less, sufficient heat insulation properties are obtained.

In certain embodiments, by using the aforesaid fire-resistant heat-insulation board, a fire-resistant structure of a building can be constructed. Such a fire-resistant structure is, for example, a structure which consists of layers of a siding board, a moisture-permeable waterproof sheet, the fire-resistant heat-insulation board, structural plywood and a reinforced gypsum board arranged in this order when shown by layer construction from the exterior wall side and in which a space (i.e., space for placing therein a heat-insulation material such as glass wool) of about 100 mm is provided between the structural plywood and the reinforced gypsum board by means of studs.

According to an embodiment of the present invention, a fire-resistant heat-insulation structure including the fire-resistant heat-insulation board is obtained.

When the fire-resistant structure is constructed, a plurality of the fire-resistant heat-insulation boards may be piled up one upon another and bonded to one another, or the fire-resistant heat-insulation board may be used together with a reinforced gypsum board, depending upon the fireproof specifications required.

Examples

Hereinafter, the contents will be described in more detail with reference to Examples and Comparative Examples, but the present invention is in no way limited to these Examples.

Experimental Example 1

The lower part of a foamed resin molded body (size: length 20 cm × width 20 cm × thickness 5 cm) having continuous voids was reinforced with alkali-resistant glass fibers, and a polyester non-woven fabric was further superposed thereon. This was set in a vibration impregnation device, then a fire-resistant heat-insulation composition slurry of the compounding shown in Table 1 was poured onto the upper surface of the molded body, and vibration of 60 Hz was applied for 1 minute to impregnate the voids with the fire-resistant heat-insulation composition slurry, thereby producing a fire-resistant heat-insulation board. After filling, the fire-resistant heat-insulation board was taken out from the device and cured at ordinary temperature for 3 days. Regarding the cured fire-resistant heat-insulation board, the content of water of crystallization, fire resistance, shape retention, the shape retention ratio and the thermal conductivity were evaluated. The results are set forth in Table 1.

Materials used

Foamed resin molded body A: The molded body was produced by filling a molding machine (manufactured by DAISEN INDUSTRY Co., Ltd., VS-500) with commercial polystyrene expanded beads (diameter: 1 to 5 mm) and heating the beads by steam to fusion-bond foamed particles to one another in a state where there were voids among the foamed particles. The continuous void ratio was controlled by adjusting the degree of pressurization. continuous void ratio: 36.8%, density of polystyrene expanded beads molded body: 10.5 kg/m$^3$, thermal conductivity of polystyrene expanded beads molded body: 0.033 W/ (m·K)

Calcium aluminate 1 (CA1): amorphous calcium aluminate obtained by adjusting compounding ratios to CAO: 43% and Al$_2$O$_3$: 53% and subjecting them to melting and quenching by an electric furnace; vitrification ratio: 98% or more, Blaine specific surface area: 6050 cm$^2$/g

Calcium aluminate 2 (CA2): Alumina Cement No. 1 manufactured by Denka Company Limited, CaO: 36%, vitrification ratio: 15%, Blaine specific surface area: 4570 cm$^2$/g

Calcium aluminate 3 (CA3): Asahi Fondu manufactured by AGC Ceramics Co., Ltd., CaO: 37%, vitrification ratio: 12%, Blaine specific surface area: 3500 cm$^2$/g Calcium aluminate 4 (CA4): Denka High Alumina Cement manufactured by Denka Company Limited, CaO: 26%, vitrification ratio: 13%, Blaine specific surface area: 4660 cm$^2$/g

Ettringite 1 (ET1): ettringite powder obtained by using slaked lime, aluminum sulfate and gypsum as staring raw materials, and by performing hydrothermal synthesis and subjecting the resulting product to filtration and drying; ratio of water of crystallization: 46%

Gypsum 1 (CS1): II type anhydrous gypsum manufactured by Noritake Co., Limited, trade name: D-101A, purity: 95%, average particle size 20 $\mu$m

Gypsum 2 (CS2): 0 type hemihydrate gypsum manufactured by Noritake Co., Limited, trade name: FT-2, purity: 95%, average particle size 20 $\mu$m

Gypsum 3 (CS3): dihydrate gypsum manufactured by Noritake Co., Limited, trade name: P52B, purity: 95%, average particle size: 20 $\mu$m

Fibrous mineral (F1): sepiolite manufactured by TOLSA, trade name: PANGEL AD, water content: 13.2%, fiber length: 5 $\mu$m, fiber diameter: 0.1 $\mu$m, specific surface area: 270 m$^2$/g

Fibrous mineral (F2): palygorskite (attapulgite) manufactured by Active Minerals International, LLC, trade name: MIN-U-GEL 200, water content: 9.8%, fiber length: 5 $\mu$m, fiber diameter: 0.1 $\mu$m, specific surface area: 270 m$^2$/g

Fibrous mineral (F3): wollastonite manufactured by KANSAI MATEC CO., LTD., trade name: KTP-H02, water content: 2.0%, fiber length: 75 $\mu$m, fiber diameter: 10 $\mu$m, specific surface area: 4200 cm$^2$/g

Non-fibrous mineral (N1): bentonite manufactured by KUNIMINE INDUSTRIES CO. LTD., trade name: KUNIGEL V1, the ratio of water of crystallization: 3.5%, specific surface area: 60 m$^2$/g

Water: tap water

Preparation of fire-resistant heat-insulation composition slurry and amount of charge

To 100 parts by mass of calcium aluminate, gypsum was added in the amount shown in Table 1 to prepare a mixture, then to 100 parts by mass of the mixture, a fibrous mineral of the type and the amount shown in Table 1 and 100 parts by mass of water were added, and they were stirred for 5 minutes to prepare a slurry. The prepared slurry was poured onto the upper surface of the foamed resin molded body in an amount of 810 cm$^3$ (i.e., 1.1 times the void volume of the resin molded body). Regarding the synthetic ettringite, 100 parts by mass of the synthetic ettringite were mixed with a predetermined amount of a fibrous mineral to prepare a mixture, then to 100 parts by mass of the mixture, 100 parts by mass of water were added, and they were stirred for 5 minutes to prepare a slurry.

Measuring methods

Continuous void ratio: A continuous void ratio of the foamed resin molded body was determined. A sample was cut out from the foamed resin molded body having been allowed to stand for 24 hours or more in an environment of the temperature of 23°C and the relative humidity of 50%, then an apparent volume Va [cm$^3$] was determined from external dimensions (length 10 cm × width 10 cm × thickness 5 cm) of the sample, the sample was sunk in a measuring cylinder containing ethanol of 23°C using a wire cloth, and slight vibration or the like was applied to the sample to remove air present in the voids of the molded body. Then, taking into consideration a volume of the wire cloth, a water level rise was read out, and a true volume Vb of the sample was measured. Using the apparent volume Va and the true volume Vb, the continuous void ratio V [%] was determined from the following formula.

$$\texttt{Continuous void ratio V [\%] = [(Va-Vb)/Va]×100}$$

Content of water of crystallization (amount of water of crystallization): A sample of 20 g was obtained from the fire-resistant heat-insulation board, then the free water in the hardened body and the foam were dissolved in acetone, the resulting solution was filtered, and thereafter, the residue was thoroughly washed with acetone and vacuum-dried for 48 hours in a desiccator in an environment of 25°C. A mass decrease of the dried hardened substance in the range of 50 to 200°C was measured by a thermal analyzer (temperature increasing rate: 10°C/min, in the air), and the measured value was taken as the amount of water of crystallization. The water of crystallization in the present specification refers to water contained in the fire-resistant heat-insulation board and chemically or physically bonded thereto, except free water capable of being removed by drying of acetone or the like.

Fire resistance: Reaction-to-fire tests by a cone calorimeter shown in ISO-5660-1:2002 were carried out, and fire resistance was simply evaluated. It is preferable that the gross calorific value, as measured under the conditions of a heating time of 20 minutes using a specimen having length 10 cm × width 10 cm × thickness 5 cm, be 8 MJ/m$^2$ or less because the specimen has fire resistance (incombustibility).

Thermal conductivity: Using a specimen having length 10 cm × width 5 cm × thickness 5 cm obtained from the fire-resistant heat-insulation board, a thermal conductivity was measured by a quick thermal conductivity meter (box type probe method).

Shape retention: A specimen was subjected to a combustion test by a cone calorimeter, then a case where the specimen was free from crack, breakage, collapse, defective part and shrinkage was evaluated as circle (OK), and a case where the specimen had been confirmed to have crack, breakage, collapse and defective part was evaluated as X-mark (NG).

Shape retention ratio: A shape retention ratio was measured by comparing a volume of a specimen after a combustion test by a cone calorimeter with a volume of the specimen before the test.

[Table 1]

| Experiment No. | CA type | CS (part(s) by mass) | | F (part(s) by mass) | | Amount of water of crystallization (%) | Fire resistance (MJ/m²) | Shape retention | Shape retention ratio (%) | Thermal conductivity (W/m K) | Remarks |
|---|---|---|---|---|---|---|---|---|---|---|---|
| 1-1 | CA1 | CS1 | 100 | - | 0 | 32.0 | 8.9 | × | unmeasurable | 0.088 | Comparative Example |
| 1-2 | CA1 | CS1 | 100 | F1 | 7 | 36.0 | 3.9 | ○ | 96.8 | 0.049 | Example |
| 1-3 | CA1 | CS2 | 100 | F1 | 7 | 35.2 | 4.3 | ○ | 96.5 | 0.051 | Example |
| 1-4 | CA1 | CS3 | 100 | F1 | 7 | 35.0 | 4.4 | ○ | 96.4 | 0.055 | Example |
| 1-5 | CA2 | CS1 | 100 | F1 | 7 | 34.0 | 6.5 | ○ | 97.0 | 0.058 | Example |
| 1-6 | CA3 | CS1 | 100 | F1 | 7 | 33.0 | 6.8 | ○ | 95.6 | 0.062 | Example |
| 1-7 | CA4 | CS1 | 100 | F1 | 7 | 22.4 | 10.1 | × | 89.9 | 0.099 | Comparative Example |
| 1-8 | CA1 | CS1 | 70 | F1 | 7 | 35.9 | 5.0 | ○ | 96.7 | 0.052 | Example |
| 1-9 | CA1 | CS1 | 120 | F1 | 7 | 36.5 | 3.7 | ○ | 97.1 | 0.046 | Example |
| 1-10 | CA1 | CS1 | 150 | F1 | 7 | 35.8 | 4.1 | ○ | 96.7 | 0.049 | Example |
| 1-11 | CA1 | CS1 | 200 | F1 | 7 | 35.7 | 4.4 | ○ | 97.0 | 0.051 | Example |
| 1-12 | CA1 | CS1 | 250 | F1 | 7 | 34.6 | 4.6 | ○ | 97.0 | 0.053 | Example |
| 1-13 | CA1 | CS1 | 100 | F1 | 0.1 | 35.1 | 4.5 | ○ | 96.5 | 0.059 | Example |
| 1-14 | CA1 | CS1 | 100 | F1 | 0.5 | 35.3 | 4.3 | ○ | 96.5 | 0.058 | Example |
| 1-15 | CA1 | CS1 | 100 | F1 | 1 | 35.5 | 4.3 | ○ | 96.5 | 0.058 | Example |
| 1-16 | CA1 | CS1 | 100 | F1 | 3 | 35.6 | 4.1 | ○ | 96.8 | 0.053 | Example |
| 1-17 | CA1 | CS1 | 100 | F1 | 5 | 35.9 | 3.9 | ○ | 96.8 | 0.052 | Example |
| 1-18 | CA1 | CS1 | 100 | F1 | 10 | 36.0 | 3.8 | ○ | 97.1 | 0.048 | Example |
| 1-19 | CA1 | CS1 | 100 | F1 | 15 | 36.2 | 4.2 | ○ | 97.1 | 0.052 | Example |
| 1-20 | CA1 | CS1 | 100 | F1 | 20 | 36.0 | 4.9 | ○ | 96.9 | 0.058 | Example |
| 1-21 | CA1 | CS1 | 100 | F2 | 7 | 36.0 | 3.9 | ○ | 97.0 | 0.050 | Example |
| 1-22 | CA1 | CS1 | 100 | F3 | 7 | 32.2 | 8.3 | × | 88.8 | 0.076 | Comparative Example |

(continued)

| Experiment No. | CA type | CS (part(s) by mass) | | F (part(s) by mass) | | Amount of water of crystallization (%) | Fire resistance (MJ/m$^2$) | Shape retention | Shape retention ratio (%) | Thermal conductivity (W/m K) | Remarks |
|---|---|---|---|---|---|---|---|---|---|---|---|
| 1-23 | CA1 | CS1 | 100 | F1/F2 | 5/5 | 35.6 | 3.8 | ○ | 97.1 | 0.048 | Example |
| 1-24 | CA1 | CS1 | 100 | N1 | 7 | 32.0 | 8.9 | × | 87.6 | 0.078 | Comparative Example |
| 1-25 | ET1 | - | - | F1 | 7 | 23.9 | 16.5 | × | unmeasurable | 0.079 | Comparative Example |
| 1-26 | ET1 | - | - | F1 | 20 | 25.7 | 13.5 | × | unmeasurable | 0.079 | Comparative Example |
| 1-27 | ET1 | - | - | F1 | 50 | 29.6 | 11.2 | × | 84.2 | 0.079 | Comparative Example |

The amount of gypsum (CS) is an amount in terms of part(s) by mass based on 100 parts by mass of calcium aluminate (CA).
The amount of the fibrous mineral (F) is an amount in terms of part(s) by mass based on 100 parts by mass of the mixture of calcium aluminate (CA) and gypsum (CS).
In Experiment No. 1-23, based on 100 parts by mass of the mixture of calcium aluminate (CA) and gypsum (CS), 5 parts by mass of the fibrous mineral (F1) and 5 parts by mass of the fibrous mineral (f2) were mixed and used.

From Table 1, it can be seen that by using calcium aluminate satisfying the predetermined conditions, gypsum and a fibrous mineral, the amount of water of crystallization in the hardened body having been filled, e.g., the amount of water of crystallization in ettringite, greatly increased. That is to say, since the fibrous mineral contributes to the reaction of calcium aluminate with gypsum, the ettringite content increases, and fire resistance, shape retention and thermal conductivity can be enhanced. By contrast, it can be seen that in the Comparative Example using synthetic ettringite, the amount of water of crystallization did not increase even by using a fibrous mineral. It is though that in the Comparative Example, most of water added in the preparation of the slurry exists as free water not as water of crystallization, so that the free water is easily lost when dried over time or heated, and such an effect as exerted by the Examples cannot be obtained.

Experimental Example 2

To 100 parts by mass of calcium aluminate (CA1), 120 parts by mass of gypsum (CS1) were added, then to 100 parts by mass of the mixture of calcium aluminate and gypsum, an inorganic powder of the type and the amount shown in Table 2, 7 parts by mass of the fibrous mineral (F1) and 100 parts by mass of water were added, and a fire-resistant heat-insulation composition slurry was prepared in the same manner as in Experimental Example 1, followed by evaluating performance. The results are set forth in Table 2.

Materials used

Inorganic powder 1 (P1): Shirasu balloon manufactured by AXYZ Chemical Co. Ltd., trade name: MSB-301, average particle size: 50 $\mu$m

Inorganic powder 2 (P2): Shirasu balloon manufactured by AXYZ Chemical Co. Ltd., trade name: ISM-F015, average particle size: 22 $\mu$m

Inorganic powder 3 (P3): Shirasu balloon manufactured by AXYZ Chemical Co. Ltd., trade name: MSB-5011, average particle size: 96 $\mu$m

Inorganic powder 4 (P4): fly ash balloon manufactured by TOMOE Engineering Co., Ltd., trade name: Cenolite SA, average particle size: 80 $\mu$m

Inorganic powder 5 (P5): waste glass foam powder manufactured by DENNERT PORAVER GMBH, trade name: Poraver (0.04-0.125 mm particle size product, average particle size: 90 $\mu$m

[Table 2]

| Experiment No. | P (part(s) by mass) | | Amount of water of crystallization (%) | Fire resistance (MJ/m$^2$) | Shape retention | Shape retention ratio (%) | Thermal conductivity (W/mK) | Remarks |
|---|---|---|---|---|---|---|---|---|
| 1-9 | - | 0 | 36.5 | 3.7 | ○ | 97.1 | 0.046 | Example |
| 2-1 | P1 | 15 | 35.0 | 4.7 | ○ | 99.1 | 0.042 | Example |
| 2-2 | P2 | 15 | 35.2 | 4.8 | ○ | 99.2 | 0.042 | Example |
| 2-3 | P3 | 15 | 35.1 | 5.0 | ○ | 98.9 | 0.043 | Example |
| 2-4 | P4 | 15 | 35.0 | 4.9 | ○ | 98.9 | 0.042 | Example |
| 2-5 | P5 | 15 | 35.1 | 4.9 | ○ | 99.2 | 0.043 | Example |
| 2-6 | P1 | 2 | 36.2 | 4.4 | ○ | 97.8 | 0.045 | Example |
| 2-7 | P1 | 5 | 35.9 | 3.9 | ○ | 98.5 | 0.044 | Example |
| 2-8 | P1 | 10 | 35.4 | 3.9 | ○ | 98.9 | 0.043 | Example |
| 2-9 | P1 | 30 | 32.5 | 4.0 | ○ | 99.1 | 0.041 | Example |
| 2-10 | P1 | 50 | 29.6 | 4.1 | ○ | 99.1 | 0.040 | Example |
| 2-11 | P1 | 70 | 27.4 | 4.2 | ○ | 99.2 | 0.039 | Example |

(continued)

| Experiment No. | P (part(s) by mass) | | Amount of water of crystallization (%) | Fire resistance (MJ/m²) | Shape retention | Shape retention ratio (%) | Thermal conductivity (W/mK) | Remarks |
|---|---|---|---|---|---|---|---|---|
| 2-12 | P1 | 100 | 23.5 | 4.4 | ○ | 99.3 | 0.038 | Example |
| 2-13 | P1/P4 | 7/7 | 35.3 | 4.4 | ○ | 99.0 | 0.043 | Example |

The amount of the inorganic powder (P) is an amount in terms of part(s) by mass based on 100 parts by mass of the mixture of calcium aluminate (CA) and gypsum (CS).
In Experiment No. 2-13, based on 100 parts by mass of the mixture of calcium aluminate (CA) and gypsum (CS), 7 parts by mass of an inorganic powder (P1) and 7 parts by mass of an inorganic powder (P4) were mixed and used.

From Table 2, it can be seen that since the fire-resistant heat-insulation composition further contained an inorganic powder, heat insulation properties were enhanced while maintaining excellent fire resistance and shape retention.

Experimental Example 3

To 100 parts by mass of calcium aluminate (CA1), 120 parts by mass of gypsum (CS1) were added, then to 100 parts by mass of the mixture of calcium aluminate and gypsum, a setting retarder of the type and the amount shown in Table 3, 7 parts by mass of the fibrous mineral (F1) and 100 parts by mass of water were added, and a fire-resistant heat-insulation composition slurry was prepared in the same manner as in Experimental Example 1, followed by evaluating performance. The results are set forth in Table 3.

Materials used

    Setting retarder (R1): first grade reagent sodium citrate
    Setting retarder (R2): first grade reagent tartaric acid
    Setting retarder (R3): first grade reagent sodium gluconate

Measuring methods

Gelation time: In a plastic beaker, the fire-resistant heat-insulation composition slurry prepared was placed, then this was placed in a heat-insulation container, and a resistance thermometer bulb was put thereinto. A period of time in which owing to the generation of heat accompanying hardening of mortar, the temperature increased by 2°C from the temperature measured immediately after completion of kneading by means of a thermograph was taken as a gelation time.

[Table 3]

| Experiment No. | R (part(s) by mass) | | Gelation time (min) | Amount of water of crystallization (%) | Fire resistance (MJ/m$^2$) | Shape retention | Shape retention ratio(%) | Thermal conductivity (W/mK) | Remarks |
|---|---|---|---|---|---|---|---|---|---|
| 1-9 | - | 0 | 35 | 36.5 | 3.7 | ○ | 97.1 | 0.046 | Example |
| 3-1 | R1 | 0.05 | 50 | 36.4 | 3.7 | ○ | 96.9 | 0.046 | Example |
| 3-1 | R2 | 0.05 | 60 | 36.2 | 3.8 | ○ | 97.0 | 0.047 | Example |
| 3-2 | R3 | 0.05 | 85 | 36.2 | 3.8 | ○ | 96.7 | 0.047 | Example |
| 3-3 | R1 | 0.02 | 40 | 36.4 | 3.7 | ○ | 97.0 | 0.046 | Example |
| 3-4 | R1 | 0.07 | 60 | 36.0 | 3.9 | ○ | 96.8 | 0.047 | Example |
| 3-5 | R1 | 1.0 | 135 | 35.8 | 4.0 | ○ | 96.8 | 0.047 | Example |
| 3-6 | R1 | 2.0 | 210 | 35.5 | 4.1 | ○ | 96.6 | 0.047 | Example |
| The amount of the setting retarder (R) is an amount in terms of part(s) by mass based on 100 parts by mass of the mixture of calcium aluminate (CA) and gypsum (CS). | | | | | | | | | |

From Table 3, it can be seen that since the fire-resistant heat-insulation composition further contained a setting retarder, the usable time was able to be adjusted while maintaining excellent fire resistance, shape retention and heat insulation properties.

Experimental Example 4

To 100 parts by mass of calcium aluminate (CA1), 120 parts by mass of gypsum (CS1) were added, then to 100 parts by mass of the mixture of calcium aluminate and gypsum, 0.07 part by mass of a setting retarder, a hydration accelerator of the type and the amount shown in Table 4, 7 parts by mass of the fibrous mineral (F1) and 100 parts by mass of water were added, and a fire-resistant heat-insulation composition slurry was prepared in the same manner as in Experimental Example 1, followed by evaluating performance. The results are set forth in Table 4.

Materials used

Hydration accelerator 1 (ACC1): first grade reagent potassium hydroxide
Hydration accelerator 2 (ACC2): ordinary Portland cement manufactured by Denka Company Limited
Hydration accelerator 3 (ACC3): first grade reagent sodium carbonate
Hydration accelerator 4 (ACC4): first grade reagent anhydrous aluminum sulfate

[Table 4]

| Experiment No. | ACC (part(s) by mass) | | Gelation time (min) | Amount of water of crystallization (%) | Fire resistance (MJ/m$^2$) | Shape retention | Shape retention ratio (%) | Thermal conductivity (W/mK) | Remarks |
|---|---|---|---|---|---|---|---|---|---|
| 3-4 | - | 0 | 60 | 36.0 | 3.9 | ○ | 96.8 | 0.047 | Example |
| 4-1 | ACC1 | 5 | 30 | 38.2 | 3.6 | ○ | 97.6 | 0.046 | Example |
| 4-2 | ACC2 | 5 | 45 | 38.0 | 3.6 | ○ | 97.3 | 0.046 | Example |
| 4-3 | ACC3 | 5 | 50 | 37.9 | 3.7 | ○ | 97.4 | 0.047 | Example |
| 4-4 | ACC4 | 5 | 45 | 37.9 | 3.7 | ○ | 97.3 | 0.047 | Example |
| 4-5 | ACC1 | 0.1 | 60 | 36.5 | 3.8 | ○ | 97.2 | 0.047 | Example |
| 4-6 | ACC1 | 1 | 55 | 37.2 | 3.7 | ○ | 97.4 | 0.047 | Example |
| 4-7 | ACC1 | 3 | 50 | 37.6 | 3.7 | ○ | 97.5 | 0.047 | Example |
| 4-8 | ACC1 | 7 | 20 | 38.2 | 3.6 | ○ | 97.6 | 0.046 | Example |
| 4-9 | ACC1 | 10 | 10 | 38.4 | 3.6 | ○ | 97.5 | 0.047 | Example |
| 4-10 | ACC1 | 15 | 5 | 38.5 | 3.5 | ○ | 97.2 | 0.046 | Example |
| The amount of the hydration accelerator (ACC) is an amount in terms of part(s) by mass based on 100 parts by mass of the mixture of calcium aluminate (CA) and gypsum (CS). | | | | | | | | | |

From Table 4, it can be seen that since the fire-resistant heat-insulation composition further contained a hydration accelerator, the amount of water of crystallization was able to be increased, and the fire resistance was able to be enhanced while maintaining excellent heat insulation properties and shape retention.

[Experimental Example 5]

To 100 parts by mass of calcium aluminate (CA1), 120 parts by mass of gypsum (CS1) were added to prepare a mixture, then to 100 parts by mass of the mixture of calcium aluminate and gypsum, 7 parts by mass of the fibrous mineral (F1) and water of the amount shown in Table 5 were added, and a fire-resistant heat-insulation composition slurry was prepared in the same manner as in Experimental Example 1, followed by evaluating performance. The results are set forth in Table 5.

[Table 5]

| Experiment No. | Water (part(s) by mass) | Amount of water of crystallization (%) | Fire resistance (MJ/m$^2$) | Shape retention | Shape retention ratio (%) | Thermal conductivity (W/mK) | Remarks |
|---|---|---|---|---|---|---|---|
| 5-1 | 50 | 35.1 | 3.9 | ○ | 97.0 | 0.053 | Example |
| 5-2 | 70 | 36.3 | 3.8 | ○ | 97.0 | 0.052 | Example |
| 1-9 | 100 | 36.5 | 3.7 | ○ | 97.1 | 0.046 | Example |
| 5-3 | 150 | 36.2 | 4.0 | ○ | 97.7 | 0.046 | Example |
| 5-4 | 200 | 35.9 | 4.4 | ○ | 97.5 | 0.046 | Example |
| 5-5 | 250 | 35.5 | 4.8 | ○ | 96.2 | 0.047 | Example |
| 5-6 | 300 | 33.5 | 5.2 | ○ | 95.2 | 0.050 | Example |
| The amount of water is an amount in terms of part(s) by mass based on 100 parts by mass of the mixture of calcium aluminate (CA) and gypsum (CS). | | | | | | | |

From Table 5, it can be seen that by preparing a fire-resistant heat-insulation composition slurry using an appropriate amount of water, excellent fire resistance, shape retention and heat insulation properties were exhibited.

Experimental Example 6

To 100 parts by mass of calcium aluminate (CA1), 120 parts by mass of gypsum (CS1) were added, then to 100 parts by mass of the mixture of calcium aluminate and gypsum, 7 parts by mass of the fibrous mineral (F1) and 100 parts by mass of water were added, and a fire-resistant heat-insulation composition slurry was prepared in the same manner as in Experimental Example 1 while the void ratio of the foamed resin molded body was changed as shown in Table 6, followed by evaluating performance. The results are set forth in Table 6.

Materials used

Foamed resin molded body B: The molded body was produced by filling a molding machine (manufactured by DAISEN INDUSTRY Co., Ltd., VS-500) with commercial polystyrene expanded beads (diameter: 1 to 5 mm) and heating the beads by steam to fusion-bond foamed particles to one another in a state where there were voids among the foamed particles. The continuous void ratio was controlled by adjusting the degree of pressurization. Continuous void ratio: 25.3%, density of polystyrene expanded beads molded body: 10.5 kg/m3, thermal conductivity of polystyrene expanded beads molded body: 0.033 W/m·K

Foamed resin molded body C: The molded body was produced by filling a molding machine (manufactured by DAISEN INDUSTRY Co., Ltd., VS-500) with commercial polystyrene expanded beads (diameter: 1 to 5 mm) and heating the beads by steam to fusion-bond foamed particles to one another in a state where there were voids among the foamed particles. The continuous void ratio was controlled by adjusting the degree of pressurization. continuous void ratio: 43.9%, density of polystyrene expanded beads molded body: 10.5 kg/m3, thermal conductivity of polystyrene expanded beads molded body: 0.033 W/m·K

Foamed resin molded body D: The molded body was produced by filling a molding machine (manufactured by DAISEN INDUSTRY Co., Ltd., VS-500) with commercial polystyrene expanded beads (diameter: 1 to 5 mm) and heating the beads by steam to fusion-bond foamed particles to one another in a state where there were voids among the foamed particles. The continuous void ratio was controlled by adjusting the degree of pressurization. continuous void ratio: 58.7%, density of polystyrene expanded beads molded body: 10.5 kg/m3, thermal conductivity of polystyrene expanded beads molded body: 0.033 W/m·K

Foamed resin molded body E: The molded body was produced by filling a molding machine (manufactured by DAISEN INDUSTRY Co., Ltd., VS-500) with commercial polystyrene expanded beads (diameter: 1 to 5 mm) and heating the beads by steam to fusion-bond foamed particles to one another in a state where there were voids among the foamed particles. The continuous void ratio was controlled by adjusting the degree of pressurization. continuous void ratio: 69.4%, density of polystyrene expanded beads molded body: 10.5 kg/m3, thermal conductivity of polystyrene expanded beads molded body: 0.033 W/m·K

[Table 6]

| Experiment No. | Foamed resin molded body | Continuous void ratio (%) | Amount of water of crystallization (%) | Fire resistance (MJ/m$^2$) | Shape retention | Shape retention ratio (%) | Thermal conductivity (W/mK) | Remarks |
|---|---|---|---|---|---|---|---|---|
| 1-9 | A | 36.8 | 36.5 | 3.7 | ○ | 97.1 | 0.046 | Example |
| 6-1 | B | 25.3 | 36.4 | 6.9 | ○ | 95.5 | 0.041 | Example |
| 6-2 | C | 43.9 | 36.5 | 3.5 | ○ | 98.0 | 0.047 | Example |
| 6-3 | D | 58.7 | 36.5 | 3.3 | ○ | 99.1 | 0.049 | Example |
| 6-4 | E | 69.4 | 36.2 | 3.3 | ○ | 99.8 | 0.052 | Example |

From Table 6, it can be seen that by using a foamed resin molded body having appropriate continuous voids, excellent incombustibility, shape retention and heat-insulation properties were exhibited.

Experimental Example 7

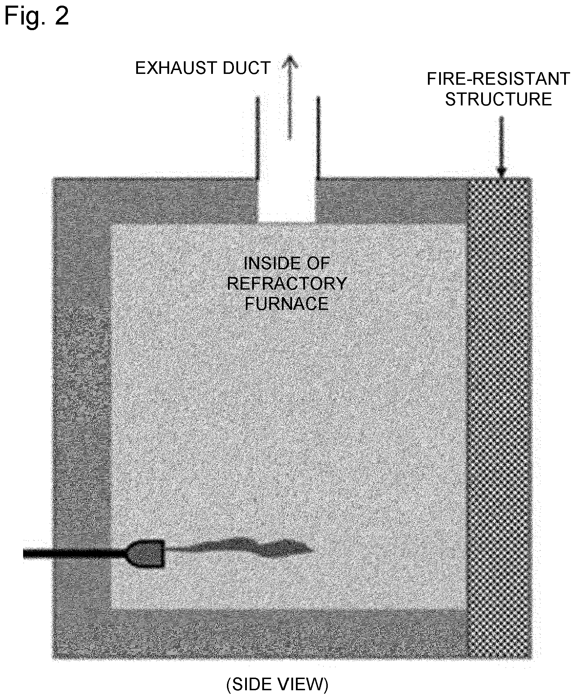

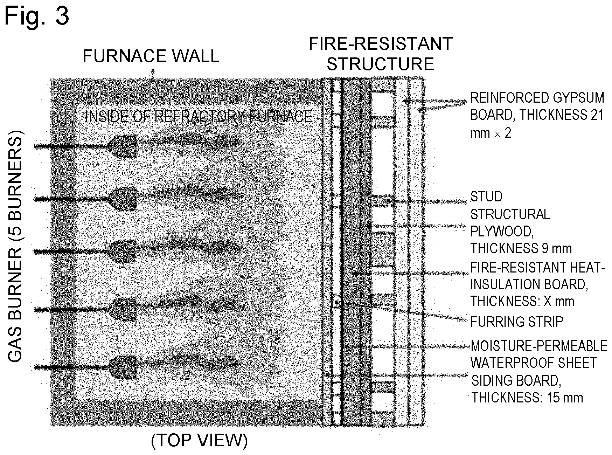

Fire-resistant heat-insulation boards (length 1000 mm × width 1000 mm × thickness 25 mm) were prepared from fire-resistant heat-insulation compositions of Experiments No. 1-7, 1-9 and 4-1, and they were each assembled so as to form a fire-resistant structure shown in Figures 2 and 3, and the fire-resistant structure was set in a refractory furnace. The size of the fire-resistant structure was adjusted to width 2200 mm × length 1200 mm. The test was carried out by changing the type and the thickness of the fire-resistant heat-insulation composition of the fire-resistant heat-insulation board, and the state of combustion of the fire-resistant structure after the test was confirmed. Change of the thickness was carried out by changing the number of boards set. The results are set forth in Table 7.

Fire resistance test methods

As shown in the side view of Figure 2 and the top view of Figure 3, the fire-resistant structure was set in a refractory furnace, and heating was carried out on the side of the siding board simulating an exterior wall, that is, flames from gas burners (five in total) were applied to heat the fire-resistant structure for 1 hour in accordance with a standard heating curve based on ISO 834. Thereafter, heating was terminated, and the state where the fire-resistant structure had been set in the refractory furnace was kept for 3 hours. The structure was removed from the refractory furnace, and the siding board on the heating side was peeled off to confirm the combustion state.

[Table 7]

| Experiment No. | Material composition of fire-resistant heat-insulation board | Thickness of fire-resistant heat-insulation board (mm) | Combustion state of fire-resistant heat-insulation board at the time of removing siding board | Remarks |
|---|---|---|---|---|
| 7-1 | Experiment No. 1-7 | 25 | Shape of fire-resistant heat-insulation board was retained, but 80% or more of structural plywood and 80% or more of studs inside burned and were carbonized. | Comparative Example |
| 7-2 | | 50 | Shapes of two fire-resistant heat-insulation boards were retained, but 30% of structural plywood and 20% of studs inside burned and were carbonized. | Comparative Example |
| 7-3 | Experiment No. 1-9 | 25 | Shape of fire-resistant heat-insulation board was retained, and studs did not burn, but 10% of structural plywood inside burned and was carbonized. | Example |
| 7-4 | | 50 | Shapes of two fire-resistant heat-insulation boards were retained, and structural plywood and studs inside did not burn at all. | Example |
| 7-5 | Experiment No. 4-1 | 25 | Shapes of two fire-resistant heat-insulation boards were retained, and structural plywood and studs inside did not burn at all. | Example |
| 7-6 | | 50 | Shapes of two fire-resistant heat-insulation boards were retained, and structural plywood and studs inside did not burn at all. | Example |
| The thickness of the fire-resistant heat-insulation board corresponds to the thickness X in Figure 3. | | | | |

From Table 7, it can be seen that as a result of evaluation of fire resistance of the fire-resistant structure constructed by using the fire-resistant heat-insulation board of the present invention, the fire resistance was enhanced. Particularly by laminating two fire-resistant heat-insulation boards together, the fire-resistant structure exhibited excellent fire resistance without burning of wood portion at all.

Industrial Applicability

By using the fire-resistant heat-insulation composition according to the embodiment of the present invention and its slurry, a fire-resistant heat-insulation board having fire resistance and heat insulation properties can be obtained. When a structure such as a wall or a pillar is constructed by using the board, the structure can retain its shape even if it is exposed to a flame, so that the structure has an effect of inhibiting spread of fire in case of fire. Accordingly, the embodiment of the present invention can contribute to construction of buildings, vehicles, aircrafts, ships, freezing facilities and refrigerating facilities having high fire safety.

## Claims

1. A fire-resistant heat-insulation composition, comprising:

   70 to 250 parts by mass of gypsum based on 100 parts by mass of calcium aluminate having a CaO content of 34% or more; and
   0.1 to 20 parts by mass of a fibrous inorganic clay mineral having a water content of 5% or more by mass, determined by the method described in the description, based on 100 parts by mass of the total of the calcium aluminate and the gypsum.

2. The fire-resistant heat-insulation composition according to claim 1, further comprising an inorganic powder having pores.

3. The fire-resistant heat-insulation composition according to any one of claims 1 to 2, further comprising a setting retarder.

4. The fire-resistant heat-insulation composition according to any one of claims 1 to 3, further comprising a hydration accelerator.

5. A fire-resistant heat-insulation composition slurry, obtained by mixing the fire-resistant heat-insulation composition according to any one of claims 1 to 4 and water.

6. A fire-resistant heat-insulation board, comprising:

   a resin molded body having a continuous void ratio of 25 to 70 vol%; and
   the fire-resistant heat-insulation composition slurry according to claim 5 filled in the voids of the resin molded body and solidified.

7. A fire-resistant heat-insulation structure comprising the fire-resistant heat-insulation board according to claim 6.

## Patentansprüche

1. Feuerbeständige Wärmedämmungszusammensetzung, umfassend:

   70 bis 250 Masseteile Gips, bezogen auf 100 Masseteile Calciumaluminat mit einem CaO-Gehalt von 34 % oder mehr, und
   0,1 bis 20 Masseteile eines faserigen anorganischen Tonminerals mit einem Wassergehalt von 5 Massenprozent oder mehr, bestimmt nach dem in der Beschreibung beschriebenen Verfahren, bezogen auf 100 Masseteile der Gesamtmenge des Calciumaluminats und des Gipses.

2. Feuerfeste Wärmedämmungszusammensetzung nach Anspruch 1, die ferner ein anorganisches Pulver mit Poren umfasst.

**3.** Feuerfeste Wärmedämmungszusammensetzung nach einem der Ansprüche 1 bis 2, die außerdem einen Abbindeverzögerer enthält.

**4.** Feuerbeständige Wärmedämmungszusammensetzung nach einem der Ansprüche 1 bis 3, die außerdem einen Hydratationsbeschleuniger enthält.

**5.** Feuerfester Wärmedämmungszusammensetzungsschlamm, erhalten durch Mischen der feuerfesten Wärmedämmungszusammensetzung nach einem der Ansprüche 1 bis 4 und Wasser.

**6.** Feuerbeständige Wärmedämmplatte, umfassend:

einen Harzformkörper mit einem kontinuierlichen Hohlraumanteil von 25 bis 70 Vol.-%; und
die feuerfeste Wärmedämmungszusammensetzung nach Anspruch 5, die in die Hohlräume des Harzformkörpers gefüllt und verfestigt wird.

**7.** Feuerbeständige Wärmedämmungsstruktur, die die feuerbeständige Wärmedämmungsplatte nach Anspruch 6 umfasst.

**Revendications**

**1.** Composition d'isolation thermique résistante au feu, comprenant :

70 à 250 parties en masse de gypse sur la base de 100 parties en masse d'aluminate de calcium ayant une teneur en CaO de 34 % ou plus ; et
0,1 à 20 parties en masse d'un minéral argileux inorganique fibreux ayant une teneur en eau de 5 % ou plus en masse, déterminée par le procédé décrit dans la description, sur la base de 100 parties en masse du total de l'aluminate de calcium et du gypse.

**2.** Composition d'isolation thermique résistante au feu selon la revendication 1, comprenant en outre une poudre inorganique ayant des pores.

**3.** Composition d'isolation thermique résistante au feu selon l'une des revendications 1 à 2, comprenant en outre un retardateur de prise.

**4.** Composition d'isolation thermique résistante au feu selon l'une des revendications 1 à 3, comprenant en outre un accélérateur d'hydratation.

**5.** Suspension de composition d'isolation thermique résistante au feu, obtenue en mélangeant la composition d'isolation thermique résistante au feu selon l'une des revendications 1 à 4 et de l'eau.

**6.** Panneau d'isolation thermique résistant au feu, comprenant :

un corps moulé en résine ayant un taux de vide continu de 25 à 70 % en volume ; et
la suspension de composition d'isolation thermique résistante au feu selon la revendication 5 ayant rempli les vides du corps moulé en résine et s'étant solidifiée.

**7.** Structure d'isolation thermique résistante au feu comprenant le panneau d'isolation thermique résistant au feu selon la revendication 6.

# Fig. 1

● Si   ⊗ Mg   ◯ O   ⊕ OH   ⊘ WATER (BOUND WATER)   ⊕ WATER (ZEOLITE WATER)

# Fig. 2

EXHAUST DUCT

FIRE-RESISTANT
STRUCTURE

INSIDE OF
REFRACTORY
FURNACE

(SIDE VIEW)

# Fig. 3

FURNACE WALL

FIRE-RESISTANT
STRUCTURE

INSIDE OF REFRACTORY FURNACE

GAS BURNER (5 BURNERS)

REINFORCED GYPSUM
BOARD, THICKNESS 21
mm × 2

STUD
STRUCTURAL
PLYWOOD,
THICKNESS 9 mm

FIRE-RESISTANT HEAT-
INSULATION BOARD,
THICKNESS: X mm

FURRING STRIP

MOISTURE-PERMEABLE
WATERPROOF SHEET

SIDING BOARD,
THICKNESS: 15 mm

(TOP VIEW)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10067576 A
- JP 8092555 A
- JP 2001329629 A
- JP 2012102305 A
- JP 4983967 B
- JP 2015199945 A
- JP 2017077994 A
- JP 7048153 A
- JP 7061841 A
- JP 62041774 A
- JP 63297256 A
- JP 2004059347 A
- JP 2002338236 A